(19)

Europäisches
Patentamt

European
Patent Office

Office européen
des brevets

(11) **EP 4 258 765 A1**

(12) **EUROPEAN PATENT APPLICATION**
published in accordance with Art. 153(4) EPC

(43) Date of publication:
**11.10.2023 Bulletin 2023/41**

(21) Application number: **21914254.4**

(22) Date of filing: **27.12.2021**

(51) International Patent Classification (IPC):
**H04W 64/00** (2009.01)          **H04W 4/02** (2018.01)
**G01S 5/02** (2010.01)

(52) Cooperative Patent Classification (CPC):
**G01S 5/02; H04W 4/02; H04W 64/00**

(86) International application number:
**PCT/CN2021/141620**

(87) International publication number:
**WO 2022/143518 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2020   CN 202011635869**

(71) Applicant: **Huawei Technologies Co., Ltd.
Shenzhen, Guangdong 518129 (CN)**

(72) Inventors:
• **JIA, Jia**
**Shenzhen, Guangdong 518129 (CN)**
• **CHEN, Jun**
**Shenzhen, Guangdong 518129 (CN)**
• **LIU, Hong**
**Shenzhen, Guangdong 518129 (CN)**
• **DONG, Mingjie**
**Shenzhen, Guangdong 518129 (CN)**

(74) Representative: **Pfenning, Meinig & Partner mbB
Patent- und Rechtsanwälte
Theresienhöhe 11a
80339 München (DE)**

(54) **POSITIONING METHOD AND RELATED DEVICE**

(57)     This application provides a positioning method and a related device. The method includes: A positioning device receives a positioning start message, where the positioning start message is used to trigger the positioning device to position a to-be-positioned device; the positioning device records a displacement parameter generated in a movement process of the positioning device, where the displacement parameter includes a displacement direction and a displacement distance; the positioning device receives, in the movement process, a radio signal sent by the to-be-positioned device; and the positioning device obtains a relative position relationship between the positioning device and the to-be-positioned device based on the recorded displacement parameter and the radio signal sent by the to-be-positioned device. According to this solution, a to-be-positioned device can be accurately positioned by moving a positioning device, which can effectively reduce costs and complexity of a positioning system without adding another hardware device.

| A positioning device receives a positioning start message | S501 |
| The positioning device records a displacement parameter generated in a movement process of the positioning device, where the displacement parameter includes a displacement direction and a displacement distance | S502 |
| The positioning device receives, in the movement process, a radio signal sent by a to-be-positioned device | S503 |
| The positioning device obtains a relative position relationship between the positioning device and the to-be-positioned device based on the recorded displacement parameter and the radio signal sent by the to-be-positioned device | S504 |

FIG. 5

## Description

This application claims priority to Chinese Patent Application No. 202011635869.5, filed with the China National Intellectual Property Administration on December 31, 2020 and entitled "POSITIONING METHOD AND RELATED DEVICE", which is incorporated herein by reference in its entirety.

## TECHNICAL FIELD

This application relates to the field of communication technologies, and in particular, to a positioning method and a related device.

## BACKGROUND

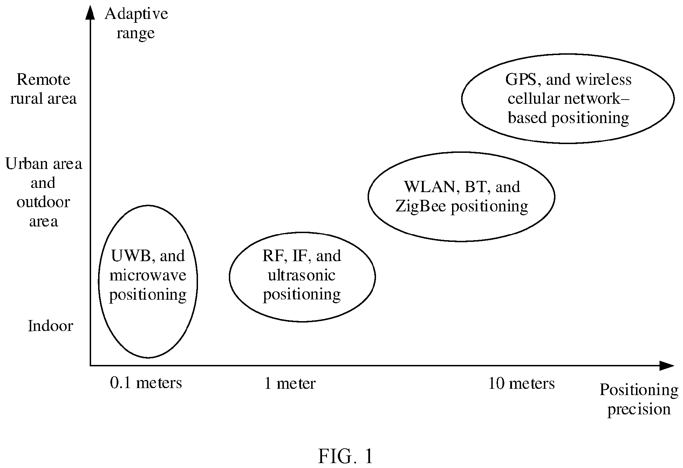

Emergence and popularization of a global positioning system (global positioning system, GPS) technology promote large-scale development of a positioning technology. With intelligent development of a wireless communication system, a wireless terminal is required by a user to provide diversified services. A very important service is a location based service (location based service, LBS). To be specific, the wireless terminal can obtain multiple types of position information through satellite communication, cellular network communication, wireless local area networks (wireless local area networks, WLAN), and other common wireless communication networks, and provide the location based service for the user. In outdoor scenarios, common LBS technologies include GPS, wireless cellular network-based positioning, and other technologies. Common indoor LBS technologies include WLAN, radio frequency identification (radio frequency identification, RFID), Bluetooth (Bluetooth, BT), ultra-wideband (ultra-wideband, UWB), and other technologies. Indoor positioning precision is higher than outdoor positioning precision, and may usually reach the meter level. The UWB technology can even reach the centimeter level. FIG. 1 shows performance comparison of various positioning technologies. It may be learned that GPS and wireless cellular networks have lowest positioning precision and are applicable to remote areas such as rural areas. UWB and microwave positioning have highest positioning precision and are applicable to indoor positioning. WLAN, BT, radio frequency (radio frequency, RF), intermediate frequency (intermediate frequency, IF), and ultrasonic positioning have intermediate precision and are applicable to urban areas or outdoor areas.

A wireless network-based positioning technology calculates position information mainly based on wireless parameters for representing a position on a network, such as received signal strength (received signal strength, RSS), time of arrival (time of arrival, TO A), and an angle of arrival (angle of arrival, AOA). Currently, common positioning technologies are mainly Bluetooth signal-based positioning and UWB signal-based positioning. A Bluetooth positioning technology estimates a distance between a to-be-positioned device and a positioning device based on RSS, to calculate a position of a target. However, the RSS is affected by multipath and obstacles in a long distance, and has poor positioning precision. In addition, a Bluetooth protocol cannot be used for networking, and usually needs to be combined with WLAN during combination and reporting of positioning information, to implement a positioning function. Compared with Bluetooth, WLAN, and the like, UWB has a higher bandwidth, and usually requires at least 500 megahertz bandwidth. Because UWB occupies a large bandwidth and has a high sampling rate, positioning precision at a centimeter level may be implemented even in a short distance. However, to adapt to UWB positioning, a UWB communication module needs to be added to a to-be-positioned device and a positioning device, causing a positioning cost increase. In addition, a UWB system has a small transmit power and a large bandwidth, limiting a maximum propagation and positioning distance.

Therefore, how to effectively improve positioning precision, reduce complexity of a positioning system, and reduce costs of the positioning system is a problem that needs to be urgently resolved currently.

## SUMMARY

This application provides a positioning method and a related device, to accurately position a to-be-positioned device by moving a positioning device and effectively reduce costs and complexity of a positioning system without adding another hardware device.

According to a first aspect, a positioning method is provided. The method includes: A positioning device receives a positioning start message, where the positioning start message is used to trigger the positioning device to position a to-be-positioned device; the positioning device records a displacement parameter generated in a movement process of the positioning device, where the displacement parameter includes a displacement direction and a displacement distance; the positioning device receives, in the movement process, a radio signal sent by the to-be-positioned device; and the positioning device obtains a relative position relationship between the positioning device and the to-be-positioned device based on the recorded displacement parameter and the radio signal sent by the to-be-positioned device.

In the solution provided in this application, after receiving the positioning start message, the positioning device achieves an effect of a synthetic aperture antenna array through movement, and then positions the to-be-positioned device based on the radio signal sent by the to-be-positioned device. This resolves a problem that a conventional positioning device can only perform ranging but cannot perform positioning on the to-be-positioned device, effectively reduces complexity of a positioning system, and reduces positioning costs.

With reference to the first aspect, in a possible implementation of the first aspect, the positioning device receives the positioning start message through an input interface, where the input interface includes an application programming interface API and a positioning start interface.

In the solution provided in this application, a user may trigger, in the positioning start interface, the positioning device to perform positioning, or another application invokes, by using the API, the positioning device to perform positioning. After being triggered, the positioning device starts a positioning task to position the to-be-positioned device.

With reference to the first aspect, in a possible implementation of the first aspect, after the positioning device receives the positioning start message, the positioning device sends a positioning request message to the to-be-positioned device, where the positioning request message is used to trigger the to-be-positioned device to send the radio signal.

In the solution provided in this application, the positioning device achieves an effect of the synthetic aperture antenna array through movement. Therefore, the displacement parameter generated in the movement process of the positioning device needs to be recorded and subsequently combined with the radio signal sent by the to-be-positioned device for positioning calculation. Therefore, the positioning device sends the positioning request message to the to-be-positioned device after the movement, to trigger the to-be-positioned device to send the radio signal for positioning.

With reference to the first aspect, in a possible implementation of the first aspect, when moving to a first position, the positioning device receives a first radio signal sent by the to-be-positioned device; and when moving to a second position, the positioning device receives a second radio signal sent by the to-be-positioned device, where the first position and the second position are any two adjacent positions in the movement process of the positioning device; the positioning device obtains a plurality of angles of arrival of the to-be-positioned device through calculation based on the recorded displacement parameter, the first radio signal, and the second radio signal; and the positioning device obtains the relative position relationship between the positioning device and the to-be-positioned device based on the plurality of angles of arrival obtained through calculation.

In the solution provided in this application, the positioning device can improve positioning precision by performing a plurality of consecutive positioning calculations, and each calculation depends only on a radio signal received at an adjacent position. Therefore, the positioning device can calculate an angle of arrival of the radio signal sent by the to-be-positioned device only by storing radio signals received twice consecutively, and can clear a previously stored radio signal that is irrelevant to current calculation, thereby reducing consumption of storage space of the positioning device, and improving usage of a storage resource of the positioning device.

With reference to the first aspect, in a possible implementation of the first aspect, when moving to a first position, the positioning device receives a first radio signal sent by the to-be-positioned device; and when moving to a second position, the positioning device receives a second radio signal sent by the to-be-positioned device, where the first position and the second position are any two positions in the movement process of the positioning device; the positioning device obtains a plurality of angles of arrival of the to-be-positioned device through calculation based on the recorded displacement parameter, the first radio signal, and the second radio signal; and the positioning device obtains the relative position relationship between the positioning device and the to-be-positioned device based on the plurality of angles of arrival obtained through calculation.

In the solution provided in this application, the positioning device may store data of each positioning measurement process, obtain more angles of arrival through calculation based on all the data, and finally obtain the relative position relationship between the positioning device and the to-be-positioned device through combination calculation, so that positioning precision can be further improved.

With reference to the first aspect, in a possible implementation of the first aspect, after obtaining the relative position relationship between the positioning device and the to-be-positioned device, the positioning device sends a termination message to the to-be-positioned device, where the termination message indicates the to-be-positioned device to stop sending a radio signal.

In the solution provided in this application, the positioning device may actively send the termination message to the to-be-positioned device, so that the to-be-positioned device stops sending a radio signal, to reduce power consumption of the to-be-positioned device.

With reference to the first aspect, in a possible implementation of the first aspect, before the positioning device obtains the relative position relationship between the positioning device and the to-be-positioned device based on the recorded displacement parameter and the radio signal sent by the to-be-positioned device, the positioning device determines that a quantity of times of sending the radio signal by the to-be-positioned device exceeds a first preset threshold, and the positioning device stops continuing moving.

In the solution provided in this application, the positioning device and the to-be-positioned device may terminate a positioning procedure based on a preset quantity of positioning measurement times, to avoid that the to-be-positioned device continuously sends a radio signal, and effectively reduce power consumption of the to-be-positioned device.

With reference to the first aspect, in a possible implementation of the first aspect, the relative position relationship includes a relative distance between the positioning device and the to-be-positioned device and a relative orientation between the positioning device and the to-be-positioned device. After obtaining the relative position relationship between the positioning device and the to-be-positioned device, the positioning device compares the relative distance with a preset threshold. If the relative distance exceeds the preset threshold, the positioning device continues moving toward the to-be-positioned device based on the relative orientation, and records the displacement parameter generated in the movement process of the positioning device; when moving to a third position, the positioning device receives a third radio signal sent by the to-be-positioned device; and the positioning device updates the relative position relationship between the positioning device and the to-be-positioned device based on the recorded displacement parameter and the third radio signal.

In the solution provided in this application, the positioning device may perform positioning calculation for a plurality of times, and compare a calculation result with the preset threshold, to guide the positioning device to gradually approach the to-be-positioned device and optimize the calculation result in the positioning process. In addition, as the distance between the positioning device and the to-be-positioned device is reduced, environmental interference suffered in the positioning process is reduced, and positioning precision is improved. The positioning device may correct a direction and a distance based on the positioning result, and finally discover the to-be-positioned device by continuously correcting the direction and the distance.

With reference to the first aspect, in a possible implementation of the first aspect, the positioning device updates until the relative distance between the positioning device and the to-be-positioned device is less than the preset threshold.

According to a second aspect, a positioning device is provided. The positioning device includes: a receiving unit, configured to receive a positioning start message, where the positioning start message is used to trigger the positioning device to position a to-be-positioned device; a recording unit, configured to record a displacement parameter generated in a movement process of the positioning device, where the displacement parameter includes a displacement direction and a displacement distance; the receiving unit is further configured to receive, in the movement process, a radio signal sent by the to-be-positioned device; and a processing unit, configured to obtain a relative position relationship between the positioning device and the to-be-positioned device based on the displacement parameter and the radio signal sent by the to-be-positioned device.

With reference to the second aspect, in a possible implementation of the second aspect, the positioning device further includes a sending unit. The sending unit is configured to send a positioning request message to the to-be-positioned device, where the positioning request message is used to trigger the to-be-positioned device to send the radio signal.

With reference to the second aspect, in a possible implementation of the second aspect, the receiving unit is specifically configured to: when the positioning device moves to a first position, receive a first radio signal sent by the to-be-positioned device; and when the positioning device moves to a second position, receive a second radio signal sent by the to-be-positioned device, where the first position and the second position are any two adjacent positions in the movement process of the positioning device. The processing unit is specifically configured to: obtain a plurality of angles of arrival of the to-be-positioned device through calculation based on the recorded displacement parameter, the first radio signal, and the second radio signal; and obtain the relative position relationship between the positioning device and the to-be-positioned device based on the plurality of angles of arrival obtained through calculation.

With reference to the second aspect, in a possible implementation of the second aspect, the receiving unit is specifically configured to: when the positioning device moves to a first position, receive a first radio signal sent by the to-be-positioned device; and when the positioning device moves to a second position, receive a second radio signal sent by the to-be-positioned device, where the first position and the second position are any two positions in the movement process of the positioning device. The processing unit is specifically configured to: obtain a plurality of angles of arrival of the to-be-positioned device through calculation based on the recorded displacement parameter, the first radio signal, and the second radio signal; and obtain the relative position relationship between the positioning device and the to-be-positioned device based on the plurality of angles of arrival obtained through calculation.

With reference to the second aspect, in a possible implementation of the second aspect, the relative position relationship includes a relative distance between the positioning device and the to-be-positioned device and a relative orientation between the positioning device and the to-be-positioned device. The processing unit is further configured to compare the relative distance with a preset threshold. The recording unit is further configured to record a displacement parameter generated in a process in which the positioning device continues moving toward the to-be-positioned device based on the relative direction when the relative distance exceeds the threshold. The receiving unit is further configured to receive a third radio signal sent by the to-be-positioned device. The processing unit is further configured to update the relative position relationship between the positioning device and the to-be-positioned device based on the recorded displacement parameter and the third radio signal.

With reference to the second aspect, in a possible implementation of the second aspect, the processing unit is specifically configured to update until the relative distance between the positioning device and the to-be-positioned device is less than the preset threshold.

According to a third aspect, this application provides a computing device. The computing device includes a processor and a memory. The processor and the memory are connected through an internal bus. The memory stores instructions. The processor invokes the instructions in the memory to perform the positioning method according to any one of the first aspect and the implementations of the first aspect.

According to a fourth aspect, this application provides a computer storage medium. The computer storage medium stores a computer program. When the computer program is executed by a processor, a procedure of the positioning method according to any one of the first aspect and the implementations of the first aspect may be implemented.

According to a fifth aspect, this application provides a computer program product. The computer program includes instructions. When the computer program is executed by a computer, the computer is enabled to perform a procedure of the positioning method according to any one of the first aspect and the implementations of the first aspect.

**BRIEF DESCRIPTION OF DRAWINGS**

FIG. 1 is a diagram of performance comparison of positioning technologies according to an embodiment of this application;

FIG. 2 is a schematic diagram of a structure of a Bluetooth positioning system according to an embodiment of this application;

FIG. 3 is a schematic diagram of a structure of a UWB positioning system according to an embodiment of this application;

FIG. 4 is a schematic diagram of a system architecture according to an embodiment of this application;

FIG. 5 is a schematic flowchart of a positioning method according to an embodiment of this application;

FIG. 6 is a schematic diagram of a positioning start interface according to an embodiment of this application;

FIG. 7 is a schematic diagram of positioning based on a synthetic aperture antenna according to an embodiment of this application;

FIG. 8 is a schematic diagram of a plurality of consecutive positioning measurement times according to an embodiment of this application;

FIG. 9 is a schematic diagram of traction positioning according to an embodiment of this application;

FIG. 10 is a schematic diagram of a structure of a positioning device according to an embodiment of this application; and

FIG. 11 is a schematic diagram of a structure of a computing device according to an embodiment of this application.

**DESCRIPTION OF EMBODIMENTS**

The following clearly and completely describes technical solutions in this application with reference to accompanying drawings. It is clear that the described embodiments are merely some but not all embodiments of this application. All other embodiments obtained by a person of ordinary skill in the art based on embodiments of this application without creative efforts shall fall within the protection scope of this application.

Some terms and related technologies in this application are first described with reference to the accompanying drawings, to help a person skilled in the art have a better understanding.

Embodiments of this application relate to a positioning device. The positioning device may be a device that has one or a few antennas and has a displacement data computing capability of the positioning device. Specifically, the positioning device may be user equipment (user equipment, LTE), a mobile station, a mobile device, a user terminal, a wireless communication device, or the like. For example, the positioning device may be a cellular phone, a cordless phone, a session initiation protocol (session initiation protocol, SIP) phone, a personal digital assistant (personal digital assistant, PDA) phone, a tablet computer, a wearable device, or the like. This is not limited in this application. Unless otherwise specified, in subsequent descriptions of this application, an example in which the positioning device is a mobile phone is used for description.

Embodiments of this application further relate to a to-be-positioned device. The to-be-positioned device may be a device that sends a radio signal and communicates with the positioning device, for example, may be a wireless headset, a wireless band, a wireless watch, a mobile phone, a wearable device, or a vehicle-mounted wireless transceiver.

For ease of understanding this application, related technical knowledge included in embodiments of this application is described herein first.

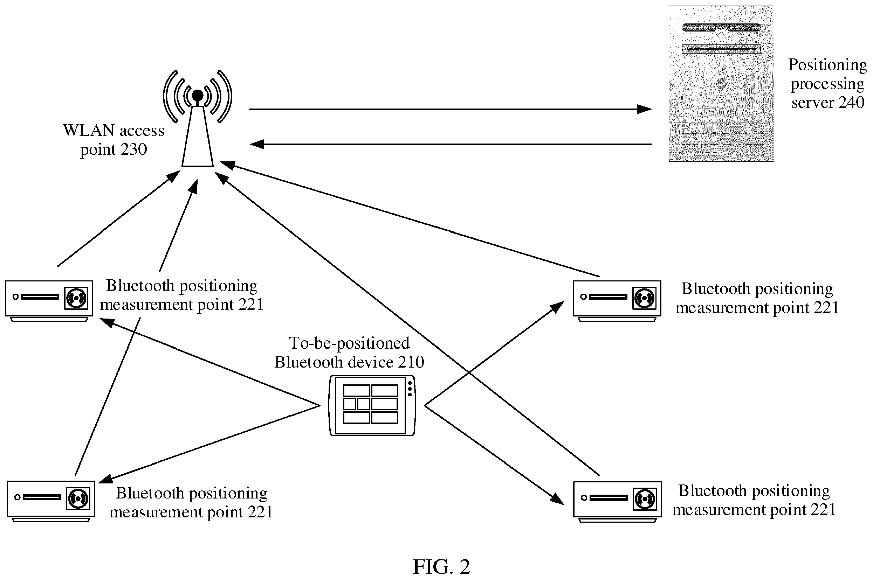

In a scenario in which positioning is performed based on a Bluetooth signal, a positioning function can be implemented only in combination with a WLAN. Specifically, RSS is used to estimate a distance between the to-be-positioned device and the positioning device, to calculate a position of the to-be-positioned device. As shown in FIG. 2, four Bluetooth positioning measurement points are deployed in a Bluetooth positioning system, including a Bluetooth positioning measurement point 221, a Bluetooth positioning measurement point 222, a Bluetooth positioning measurement point 223, and a Bluetooth positioning measurement point 224. A to-be-positioned Bluetooth device 210 sends a Bluetooth signal to each Bluetooth positioning measurement point. Each Bluetooth positioning measurement point detects the received Bluetooth signal and obtains RSS. Each Bluetooth positioning measurement point sends the detected RSS and position information of the Bluetooth positioning measurement point to a WLAN access point 230. The WLAN access point 230 reports the received RSS and position information to a positioning processing server 240. The positioning processing server 240 calculates a position of the to-be-positioned Bluetooth device 210 based on the detected RSS and position information of each Bluetooth positioning measurement point, and returns the position information of the to-be-positioned Bluetooth device 210 to a Bluetooth positioning device and a user by using the WLAN access point 230.

It may be learned that in the scenario in which positioning is performed based on a Bluetooth signal shown in FIG. 2, a plurality of Bluetooth positioning measurement points need to be deployed, and positioning needs to be completed in combination with a WLAN, resulting in a complex structure of an entire positioning system. In addition, for Bluetooth positioning, RSS is used to calculate the distance, and the RSS is prone to being affected by multipath and obstacles in a long distance, resulting in poor positioning precision. In addition, for some internet of things (internet of things, IoT) devices with ultra-low power consumption, Bluetooth cannot operate for a long time due to high power consumption. For example, when a Bluetooth headset has a low battery level, if a Bluetooth positioning function is always enabled, the Bluetooth headset may not have a sufficient operation state effective for a positioning process.

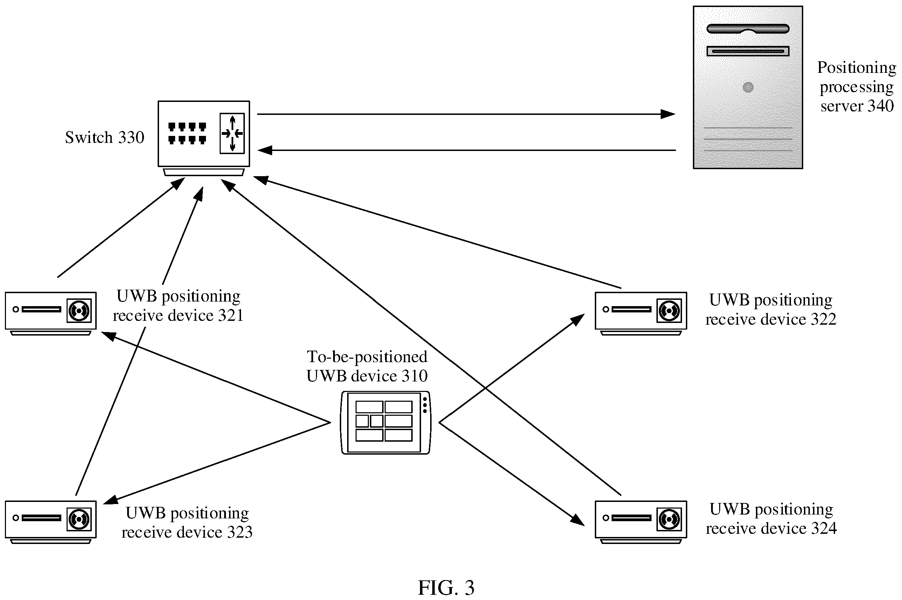

Alternatively, in a scenario in which positioning is performed based on a UWB signal, a to-be-positioned device may be accurately positioned based on a large bandwidth and a high sampling rate of the UWB signal. However, because the UWB signal occupies a large bandwidth, the UWB signal is prone to causing interference to another communication system. Therefore, the UWB signal is used for air interface communication at a low power. As shown in FIG. 3, four UWB positioning receive devices are deployed in a UWB positioning system, including a UWB positioning receive device 321, a UWB positioning receive device 322, a UWB positioning receive device 323, and a UWB positioning receive device 324. A to-be-positioned UWB device 310 sends a pulse packet signal to each UWB positioning receive device. Each UWB positioning receive device receives the pulse packet signal and measures air interface flight time of the signal. It should be noted that when three UWB positioning receive devices are deployed in a positioning area, spatial two-dimensional positioning may be completed for the to-be-positioned UWB device, or when four or more UWB positioning receive devices are deployed in a positioning area, spatial three-dimensional positioning may be completed for the to-be-positioned UWB device. Each UWB positioning receive device sends measured time data and position information of the UWB positioning receive device to a switch 330. The switch 330 reports the received time data and position information to a positioning processing server 340. The positioning processing server 340 calculates a position of the to-be-positioned UWB device 310 based on the measured time data and position information of each UWB positioning receive device, and returns the position information of the to-be-positioned UWB device 310 to a UWB positioning device and a user through the switch 330.

Similarly, in the scenario in which positioning is performed based on a UWB signal shown in FIG. 3, a plurality of UWB positioning receive devices also need to be deployed to complete positioning of the to-be-positioned UWB device, resulting in a complex structure of an entire positioning system. In addition, a UWB communication module needs to be added to the positioning device and the to-be-positioned device, which increases positioning costs and limits promotion and use of UWB positioning. In addition, the UWB signal has a small transmit power, but occupies a large bandwidth, which limits a positioning distance.

To resolve the foregoing problem, this application provides a positioning method and a related device. In the method, without changing a hardware structure of an existing device, software is upgraded, and a positioning device with mobility is used to receive, at different positions, wireless positioning signals sent by a to-be-positioned device, and positioning of the to-be-positioned device is completed based on phase differences of the signals that are sent by the to-be-positioned device and that are received at the different positions of the positioning device, thereby effectively reducing complexity of a positioning system, reducing positioning costs, and improving positioning precision.

The technical solutions in embodiments of this application may be applied to various scenarios in which a to-be-positioned device is positioned depending on movement of a positioning device. For example, an existing mobile phone is used to search for a wireless headset, a wristband, and a watch, an existing mobile phone is used to search for another mobile phone, and an existing mobile phone is used to search for a target vehicle in a parking lot or a garage.

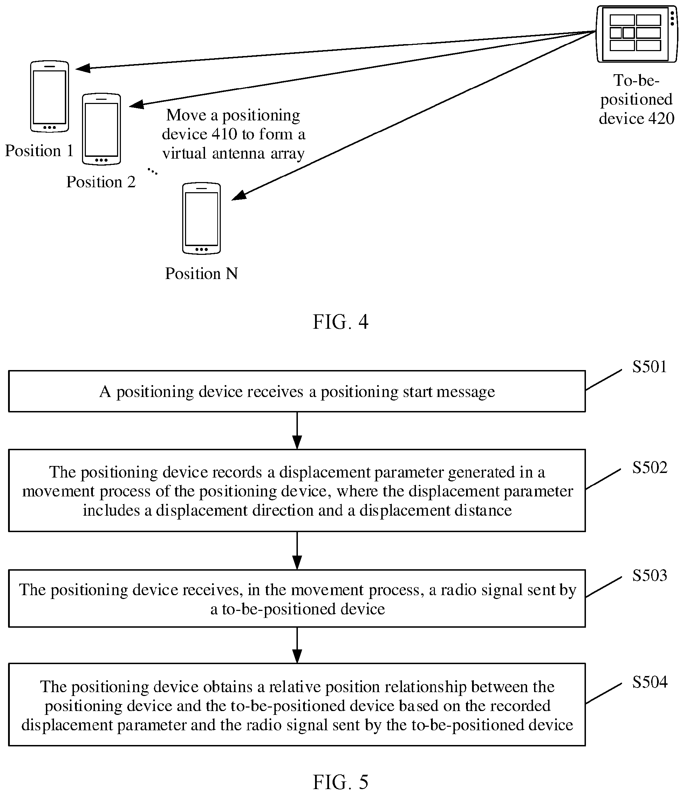

FIG. 4 is a schematic diagram of a system architecture according to an embodiment of this application. As shown in FIG. 4, the system includes a positioning device 410 and a to-be-positioned device 420. The positioning device 410 may be specifically a mobile phone, a tablet, or the like. The positioning device 410 has a small quantity of available positioning antennas, and only one or more positioning antennas exist, so that the to-be-positioned device 420 cannot be directly positioned. The to-be-positioned device 420 may be specifically a wireless headset, a wireless wristband, a wireless watch, another mobile phone, a vehicle-mounted wireless transceiver, or the like. The to-be-positioned device 420 has a capability of transmitting a radio signal. The positioning device 410 may receive a radio signal that is used for positioning and that is transmitted by the to-be-positioned device 420. It is flexible to select a communication format, a communication protocol, a communication radio frequency, communication time, and the like between the positioning device 410 and the to-be-positioned device 420. Any communication manner may be selected based on a requirement. For example, the positioning device 410 and the to-be-positioned device 420 may use a Bluetooth signal or an orthogonal frequency division multiplexing (orthogonal frequency division multiplexing, OFDM) signal for communication. The positioning device 410 moves to form a virtual antenna array, then receives, at different positions, radio signals sent by the to-be-positioned device 420, and calculates a three-dimensional direction and distance of displacement of the positioning device 410, to calculate a phase difference of the radio signals that are sent by the to-be-positioned device 420 and that are received at the different positions, and finally calculate a position of the to-be-positioned device 420, to complete positioning of the to-be-positioned device 420.

Based on the foregoing descriptions, the following describes the positioning method and the related device provided in embodiments of this application. FIG. 5 is a schematic flowchart of a positioning method according to an embodiment of this application. A positioning device and a to-be-positioned device shown in FIG. 5 may respectively correspond to the positioning device 410 and the to-be-positioned device 420 shown in FIG. 4. As shown in FIG. 5, the method includes but is not limited to the following steps.

S501: The positioning device receives a positioning start message.

Specifically, a positioning module is deployed in the positioning device. After receiving the positioning start message, the positioning device triggers the positioning module to enter an operation state, to start positioning the to-be-positioned device.

In a possible implementation, the positioning device receives the positioning start message through an input interface, where the input interface includes an application programming interface (application programming interface, API) and a positioning start interface.

Specifically, the positioning device may display the positioning start interface. A user taps a start button in the interface, to trigger the positioning device to start a positioning task to position the to-be-positioned device. Alternatively, another application invokes the positioning module in the positioning device by using the API, to trigger the positioning device to start a positioning task to position the to-be-positioned device.

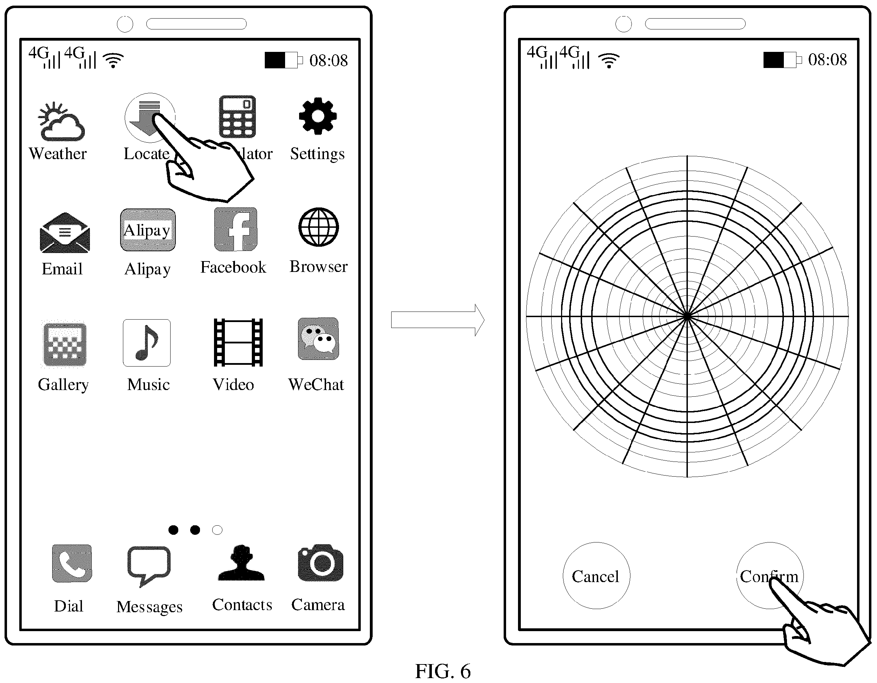

For example, an input interface is the positioning start interface. As shown in FIG. 6, the positioning device displays the positioning start interface, and the interface includes a confirmation button. The user may tap the confirmation button. After sensing that the user taps the confirmation button, the positioning device starts to start a positioning task to position the to-be-positioned device.

S502: The positioning device records a displacement parameter generated in a movement process of the positioning device, where the displacement parameter includes a displacement direction and a displacement distance.

Specifically, after starting the positioning task, the positioning device prompts the user to start to move the positioning device based on a self-defined or randomly selected direction, distance, time, or the like, and the user moves the positioning device based on the prompt.

It should be noted that a corresponding hardware device (a related sensor) is deployed in the positioning device, so that the displacement parameter of the positioning device in the movement process can be accurately calculated. For example, an accelerometer is deployed in the positioning device, to obtain a moving speed and a moving direction of the positioning device; a gyroscope is further deployed, to obtain a rotation direction; and a geomagnetic field sensor or an electronic compass may be further deployed, to obtain a geographical direction or a relative moving direction. Based on deployed related hardware, the positioning device can accurately obtain a three-dimensional direction and distance of displacement of the positioning device.

After detecting displacement of the positioning device by using the related sensor, the positioning device is triggered to send a positioning request message to the to-be-positioned device, where the positioning request message includes an identifier of the to-be-positioned device. After receiving the positioning request message, the to-be-positioned device may return an acknowledgment message to the positioning device, and send a radio signal for positioning to the positioning device.

It should be understood that, when there are a plurality of to-be-positioned devices, the positioning device may simultaneously send positioning request messages to the plurality of to-be-positioned devices. After receiving a positioning request message sent by the positioning device, each to-be-positioned device sends a radio signal for positioning to the positioning device. The positioning device may accurately distinguish radio signals sent by the to-be-positioned devices, for example, may distinguish based on device identifiers carried in the radio signals, to identify the radio signals sent by the different to-be-positioned devices.

S503: The positioning device receives, in the movement process, a radio signal sent by the to-be-positioned device.

Specifically, the movement process of the positioning device is continuous. To implement positioning of the to-be-positioned device, the radio signal sent by the to-be-positioned device does not need to be received and saved in real time, and only a radio signal sent by the to-be-positioned device at key positions needs to be collected in the movement process of the positioning device.

Optionally, the radio signal sent by the to-be-positioned device may be a Bluetooth signal, or another radio signal such as OFDM. This is not limited in this application.

S504: The positioning device obtains a relative position relationship between the positioning device and the to-be-positioned device based on the recorded displacement parameter and the radio signal sent by the to-be-positioned device.

Specifically, the positioning device collects, at the different positions in the movement process, the radio signal sent by the to-be-positioned device, to ensure that sufficient data is obtained for calculating the position of the to-be-positioned device, and finally obtain the relative position relationship between the positioning device and the to-be-positioned device.

In a possible implementation, when moving to a first position, the positioning device receives a first radio signal sent by the to-be-positioned device, and when moving to a second position, the positioning device receives a second radio signal sent by the to-be-positioned device. The positioning device inputs the recorded displacement parameter, the first radio signal, and the second radio signal into a synthetic aperture antenna model. The synthetic aperture antenna model is used to process the input data and calculate the relative position relationship between the positioning device and the to-be-positioned device.

Specifically, because the positioning device cannot directly position the to-be-positioned device, the positioning device needs to be moved and receive, at the different positions, the radio signal sent by the to-be-positioned device, so that the radio signal is virtualized into data acquired by an aperture antenna array, to calculate an angle of arrival of the radio signal sent by the to-be-positioned device, and obtain the position of the to-be-positioned device relative to the positioning device.

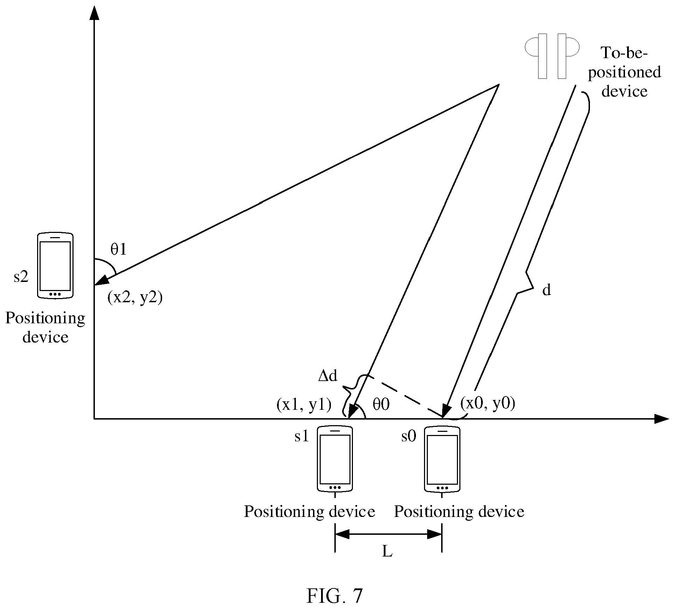

For example, FIG. 7 is a schematic diagram of positioning based on a synthetic aperture antenna according to an embodiment of this application. As shown in FIG. 7, coordinates corresponding to an initial position of a positioning device are $(x_0, y_0)$. After the positioning device is moved, the coordinates corresponding to the position of the positioning device are changed to $(x_1, y_1)$, and the moving distance is L. Assuming that a radio signal sent by a to-be-positioned device is $Ae^{j\omega ct}$, and a signal received by the positioning device at a moment $(x_0, y_0)t_0$ is $A_0 e^{j\omega_c\left(t_0 - \frac{d}{c}\right)}$, a down-converted signal

$$S_0 = A_0 e^{j\omega_c\left(t_0 - \frac{d}{c}\right)} \times e^{-j[(\omega_c - \Delta\omega)t_0 + \Delta\phi]} = A_0 e^{j\left(-\omega_c\frac{d}{c} + \Delta\omega t_0 + \Delta\phi\right)}$$ of the positioning device at $(x_0, y_0)$ may be obtained through calculation. Similarly, a down-converted signal

$$S_1 = A_1 e^{j\left(-\omega_c\frac{(d+\Delta d)}{c} + \Delta\omega t_1 + \Delta\phi\right)}$$ received by the positioning device at a moment $(x_1, y_1)t_1$ may be obtained through calculation. After $S_0$ and $S_1$ are obtained through calculation, an argument of a complex number (argument of a complex number, Arg) thereof needs to be further obtained through calculation, that is,

$$\text{Arg}\left(\frac{s_0}{s_1}\right) = \Delta\omega(t_0 - t_1) +$$

$$\omega_c\frac{\Delta d}{c} = \omega_c\frac{\Delta d}{c} + I$$ is obtained through calculation, where I is a frequency offset interference item, and I = $\Delta\omega(t_0 - t_1)$. The interference item may be estimated by securing the positioning device and continuously sampling multiple times. Then, the interference item is eliminated to obtain $\widetilde{Arg}\left(\frac{s_0}{s_1}\right) - I = \omega_c\frac{\Delta d}{c}$. It should be understood that $\Delta\omega$ is less than a signal carrier $\omega_c$, so that $\widetilde{Arg}\left(\frac{s_0}{s_1}\right) = \omega_c\frac{\Delta d}{c} \approx \omega_{RX}\frac{\Delta d}{c}$. $\omega_{RX}$ is a local carrier, and $\omega_{RX} = \omega_c - \Delta\omega$, so that a phase difference

$$\Delta d = \left(\frac{\widetilde{Arg}\left(\frac{s_0}{s_1}\right)}{\omega_{RX}}\right) \times C$$ between two signals may be further obtained. After the phase difference is obtained,

$$\theta_0 = \cos^{-1}\left(\frac{\Delta d}{L}\right)$$ an angle of arrival of a signal received by the positioning device at $(x_1, y_1)$ may be obtained through calculation, and L may be obtained by using a related sensor in the positioning device.

Similarly, after the positioning device moves from $(x_1, y_1)$ to $(x_2, y_2)$, an angle of arrival $\theta_1$ of a signal received by the positioning device at $(x_2, y_2)$ may be obtained through calculation according to a same principle. A relative position relationship between the positioning device and the to-be-positioned device may be obtained through calculation based on $\theta_0$, $\theta_1$, and a relationship between receiving positions at which the positioning device receives radio signals, to complete positioning of the to-be-positioned device.

It may be learned that, in this application, positioning of the to-be-positioned device can be completed by moving only a single positioning device without networking or support of another device, thereby greatly simplifying a system structure, reducing complexity, and expanding an applicable scenario. In addition, neither the positioning device nor the to-be-positioned device requires another additional hardware (for example, a UWB module), and hardware of an existing positioning device (for example, a mobile phone) and a to-be-positioned device (for example, a wireless wristband) can be completely reused. In addition, in this application, positioning calculation is performed by measuring an angle of arrival of a signal. Therefore, a communication mode and a protocol between the positioning device and the to-be-positioned device are not limited, thereby effectively reducing production costs and improving positioning efficiency and positioning precision.

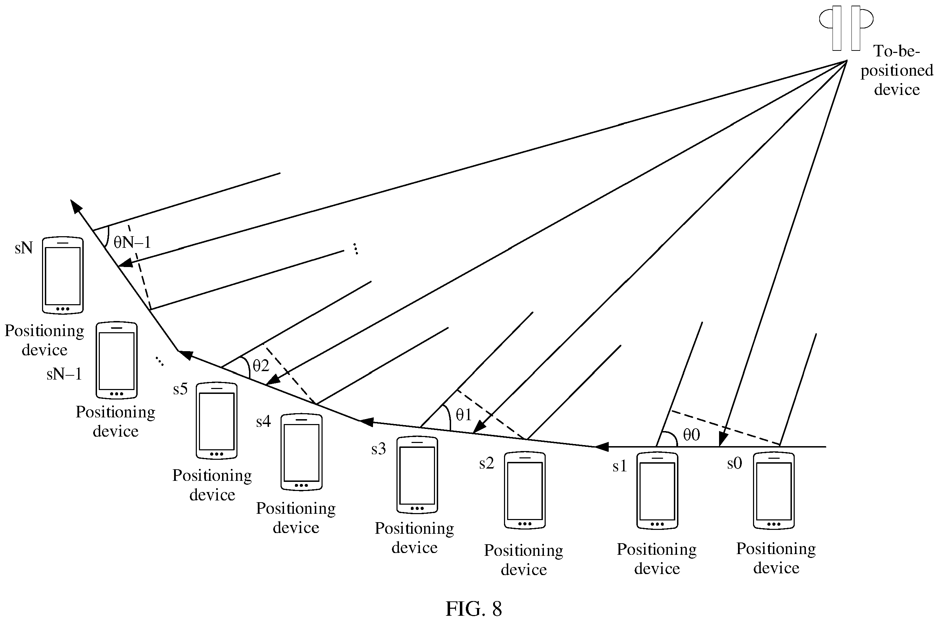

In a possible implementation, the positioning device continuously receives, at multiple different positions, radio signals sent by the to-be-positioned device. As shown in FIG. 8, the positioning device receives, at N positions, N radio signals sent by the to-be-positioned device, and calculates angles of arrival of the radio signals for any two adjacent positions in the N positions according to, for example, a synthetic aperture positioning algorithm shown in FIG. 7, so that N-1 angles of arrival may be obtained. Then, a relative position relationship between the positioning device and the to-be-positioned device is obtained through combination calculation, to complete positioning of the to-be-positioned device.

It is easy understood that positioning precision can be improved by performing a plurality of consecutive positioning calculations, and each calculation depends only on a radio signal received at an adjacent position. Therefore, the positioning device can calculate an angle of arrival of the radio signal sent by the to-be-positioned device only by storing radio signals received twice consecutively, and can clear a previously stored radio signal that is irrelevant to current calculation, thereby reducing consumption of storage space of the positioning device, and improving usage of a storage resource of the positioning device.

In another possible implementation, the positioning device receives, at different positions for a plurality of times, radio signals sent by the to-be-positioned device, and stores all the received radio signals and information about the positions at which the radio signals are received. After completing signal receiving, the positioning device calculates the position of the to-be-positioned device based on all the stored radio signals and the information about the positions at which the radio signals are received. For example, the positioning device receives, at N different positions, N radio signals sent by the to-be-positioned device and stores the N radio signals, then randomly selects, from the N radio signals, radio signals received at two different positions, and calculates, according to the synthetic aperture positioning algorithm shown in FIG. 7, angles of arrival of the radio signals sent by the to-be-positioned device, so that a total of $N \times (N-1)/2$ angles of arrival may be obtained through calculation. Finally, a relative position relationship between the positioning device and the to-be-positioned device is obtained through combination calculation. It should be noted that, although the positioning device needs to allocate more storage space to store all the received radio signals when calculating the angles of arrival of the radio signals in this manner, more angles of arrival can be obtained through calculation, and positioning precision can be further improved.

Alternatively, after the positioning device receives N radio signals at N different positions, the positioning device also obtains N pieces of position information of the positioning device. The positioning device randomly selects a sum of euclidean distances of non-repeated position pairs based on the N different pieces of position information of the positioning device, where the euclidean distance refers to a three-dimensional straight-line distance between two points in space. For example, the positioning device receives radio signals sent by the to-be-positioned device at four different positions, where the four positions are A, B, C, and D. The positioning device needs to calculate a sum of euclidean distances of AB and CD, a sum of euclidean distances of AC and BD, and a sum of euclidean distances of AD and BC, then selects a largest value of the sum of euclidean distances from all the calculated sums of euclidean distances as an optimal combination, and then calculates, according to the synthetic aperture positioning algorithm shown in FIG. 7, angles of arrival of the radio signals sent by the to-be-positioned device, to obtain a relative position relationship between the positioning device and the to-be-positioned device through calculation. It should be noted that, the position of the positioning device corresponding to the largest value of the sum of euclidean distances is selected as the optimal combination, so that a spatial multiplexing gain of the position of the positioning device can be fully used. That is, a larger spatial position difference indicates a higher channel reciprocity, a smaller interference of a same type to positioning calculation after combination, and higher calculation precision. In this manner, positioning accuracy can be effectively improved.

In a possible implementation, after obtaining the relative position relationship between the positioning device and the to-be-positioned device, the positioning device sends a termination message to the to-be-positioned device, where the termination message indicates the to-be-positioned device to stop sending a radio signal.

Specifically, after the positioning device completes positioning of the to-be-positioned device, the positioning device may further send the termination message to the to-be-positioned device, where the termination message may carry an identifier of the to-be-positioned device. After receiving the termination message sent by the positioning device, the to-be-positioned device determines that the positioning device has completed a positioning process, stops continuously sending a radio signal for positioning to the positioning device, and terminates the positioning process. This can avoid that the to-be-positioned device continuously sends a radio signal after positioning is completed, and can reduce power consumption of the to-be-positioned device and ensure that the to-be-positioned device has a sufficient state.

In a possible implementation, before performing positioning calculation, the positioning device determines whether a quantity of times of sending a radio signal by the to-be-positioned device exceeds a first preset threshold. If the quantity exceeds the first preset threshold, the positioning device stops continuing moving, and then calculates the position of the to-be-positioned device based on the received radio signal and a corresponding displacement parameter.

Specifically, the positioning device and the to-be-positioned device may agree on a procedure termination condition in advance. For example, after sending a radio signal by times over the first preset threshold, the to-be-positioned device stops continuously sending, and the positioning device and the to-be-positioned device simultaneously stop a positioning interaction process. The positioning device performs positioning calculation based on the received radio signal to obtain the position of the to-be-positioned device, and may present the position of the to-be-positioned device to a user or transmit the position to another related software. The first preset threshold may be set based on an actual requirement, for example, may be set to 10. This is not limited in this application. It should be understood that, in addition to agreeing on the quantity of times of sending a radio signal, the positioning device and the to-be-positioned device may further agree on another parameter to terminate the positioning procedure, for example, may agree on preset measurement duration in advance. When measurement time between the positioning device and the to-be-positioned device exceeds the preset measurement duration, receiving and sending of the radio signal are terminated.

In a possible implementation, the relative position relationship includes a relative distance between the positioning device and the to-be-positioned device and a relative orientation between the positioning device and the to-be-positioned device. After the positioning device obtains the relative position relationship between the positioning device and the to-be-positioned device, the positioning device compares the relative distance with a second preset threshold. If the relative distance exceeds the second preset threshold, the positioning device continues moving toward the to-be-positioned device to a third position based on the relative orientation, and records a displacement parameter generated in the movement process. The positioning device receives, at a third position, a third radio signal sent by the to-be-positioned device. The positioning device positions the to-be-positioned device based on the recorded displacement parameter and the third radio signal, and updates a relative position relationship between the positioning device and the to-be-positioned device. The positioning device compares an updated relative distance between the positioning device and the to-be-positioned device with the second preset threshold again. If the updated relative distance still exceeds the second preset threshold, the positioning device continues moving toward the to-be-positioned device and records a displacement parameter generated in the movement process, to continue updating the relative position relationship between the positioning device and the to-be-positioned device until the relative distance between the positioning device and the to-be-positioned device is less than the second preset threshold.

Specifically, in this embodiment of this application, the positioning device performs positioning calculation for a plurality of times when positioning the to-be-positioned device. A specific positioning calculation process may be the synthetic aperture positioning algorithm shown in FIG. 7. The positioning device compares each obtained positioning result with the second preset threshold, is guided based on a comparison result to move toward the to-be-positioned device, and then repeatedly performs positioning measurement and calculation until a distance between the positioning device and the to-be-positioned device is less than the second preset threshold. The second preset threshold may be set based on an actual requirement, for example, may be set to 1 meter. This is not limited in this application.

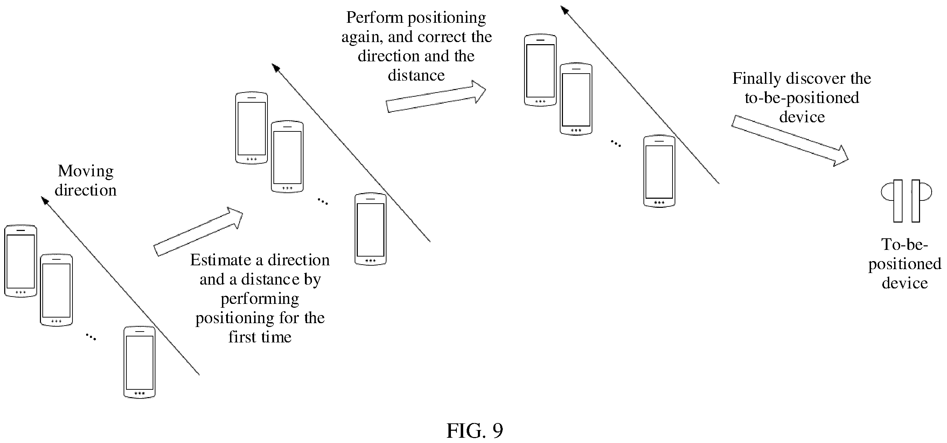

For example, FIG. 9 is a schematic diagram of traction positioning according to an embodiment of this application. As shown in FIG. 9, a positioning device may estimate a direction and a distance of a to-be-positioned device by performing positioning for the first time. In this case, a distance between the positioning device and the to-be-positioned device is long, exceeds a second preset threshold, and is prone to being interfered with by multipath and obstacles. As a result, a positioning result is not precise. Although the positioning result is not precise, the positioning device may move toward the to-be-positioned device based on the obtained direction, and then perform positioning measurement and calculation again. As the distance between the positioning device and the to-be-positioned device is reduced, environmental interference suffered in a positioning process is reduced, and positioning precision is improved. The positioning device may correct the direction and the distance based on a positioning result. Finally, after the direction and the distance are continuously corrected, the distance between the positioning device and the to-be-positioned device is less than the second preset threshold, and the positioning device may discover the to-be-positioned device.

It is easy to understand that the traction positioning method shown in FIG. 9 is very applicable to a scenario such as object searching. For example, a mobile phone is used to search for a vehicle in a parking lot or an underground garage, and a mobile phone is used to search for a wireless headset or a wireless watch or wristband. When the positioning device continues moving toward the to-be-positioned device, because the distance between the positioning device and the to-be-positioned device is continuously reduced, interference such as multipath and obstacles is continuously reduced, signal attenuation in space is continuously reduced, a signal-to-noise ratio is increased, positioning precision becomes higher, and finally the to-be-positioned device is discovered.

It may be learned that the method embodiment in FIG. 5 can reuse a hardware structure of an existing positioning device such as a mobile phone. With only one or a few antennas for positioning, the positioning device achieves an effect of a synthetic aperture antenna array through movement. This resolves a problem that a conventional positioning device can only perform ranging and cannot perform positioning on the to-be-positioned device, effectively reduces complexity of a positioning system, and reduces positioning costs. In addition, a traction positioning method improves positioning precision.

It should be further understood that, all the described embodiments are described by using an example in which the positioning device positions one to-be-positioned device. A specific process and an implementation principle of positioning a plurality of to-be-positioned devices simultaneously by the positioning device are consistent with those described above. The positioning device may separately position the to-be-positioned devices based on radio signals sent by the different to-be-positioned devices. For brevity, details are not described herein again.

The methods in embodiments of this application are described in detail above. For ease of better implementing the solutions in embodiments of this application, correspondingly the following further provides a related device used to cooperate in implementing the foregoing solutions.

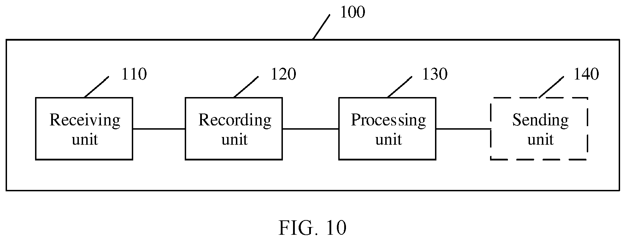

FIG. 10 is a schematic diagram of a structure of a positioning device according to an embodiment of this application. The positioning device 100 includes a receiving unit 110, a recording unit 120, and a processing unit 130.

The receiving unit 110 is configured to receive a positioning start message, where the positioning start message is used to trigger the positioning device to position a to-be-positioned device.

The recording unit 120 is configured to record a displacement parameter generated in a movement process of the positioning device, where the displacement parameter includes a displacement direction and a displacement distance.

The receiving unit 110 is further configured to receive, in the movement process, a radio signal sent by the to-be-positioned device.

The processing unit 130 is configured to obtain a relative position relationship between the positioning device and the to-be-positioned device based on the displacement parameter and the radio signal sent by the to-be-positioned device.

In an embodiment, the receiving unit 110 is specifically configured to receive the positioning start message through an input interface, where the input interface includes an application programming interface API and a positioning start interface.

In an embodiment, the positioning device 100 further includes a sending unit 140. The sending unit 140 is configured to send a positioning request message to the to-be-positioned device, where the positioning request message is used to trigger the to-be-positioned device to send the radio signal.

In an embodiment, the receiving unit 110 is specifically configured to: when the positioning device moves to a first position, receive a first radio signal sent by the to-be-positioned device; and when the positioning device moves to a second position, receive a second radio signal sent by the to-be-positioned device, where the first position and the second position are any two adjacent positions in the movement process of the positioning device. The processing unit 130 is specifically configured to: obtain a plurality of angles of arrival of the to-be-positioned device through calculation based on the recorded displacement parameter, the first radio signal, and the second radio signal; and obtain the relative position relationship between the positioning device and the to-be-positioned device based on the plurality of angles of arrival obtained through calculation.

In an embodiment, the receiving unit 110 is specifically configured to: when the positioning device moves to a first position, receive a first radio signal sent by the to-be-positioned device; and when the positioning device moves to a second position, receive a second radio signal sent by the to-be-positioned device, where the first position and the second position are any two positions in the movement process of the positioning device. The processing unit 130 is specifically configured to: obtain a plurality of angles of arrival of the to-be-positioned device through calculation based on the recorded displacement parameter, the first radio signal, and the second radio signal; and obtain the relative position relationship between the positioning device and the to-be-positioned device based on the plurality of angles of arrival obtained through calculation.

In an embodiment, the sending unit 140 is further configured to send a termination message to the to-be-positioned device, where the termination message indicates the to-be-positioned device to stop sending a radio signal.

In an embodiment, the processing unit 130 is further configured to prompt the positioning device to stop continuing moving after determining that a quantity of times of sending a radio signal by the to-be-positioned device exceeds a first preset threshold.

In an embodiment, the relative position relationship includes a relative distance between the positioning device and the to-be-positioned device and a relative orientation between the positioning device and the to-be-positioned device. The processing unit 130 is further configured to compare the relative distance with a preset threshold. The recording unit 120 is further configured to record a displacement parameter generated in a process in which the positioning device continues moving toward the to-be-positioned device based on the relative direction when the relative distance exceeds the threshold. The receiving unit 110 is further configured to receive a third radio signal sent by the to-be-positioned device. The processing unit 130 is further configured to update the relative position relationship between the positioning device and the to-be-positioned device based on the recorded displacement parameter and the third radio signal.

In an embodiment, the processing unit 130 is specifically configured to update until the relative distance between the positioning device and the to-be-positioned device is less than the preset threshold.

It may be understood that, in this embodiment of this application, the receiving unit 110 and the sending unit 140 may be implemented by a transceiver or a transceiver-related circuit component, and the recording unit 120 and the processing unit 130 may be implemented by a processor or a processor-related circuit component. The positioning device may perform the steps performed by the positioning device in the positioning method shown in FIG. 5. Details are not described herein again. For details, refer to FIG. 5 and related content.

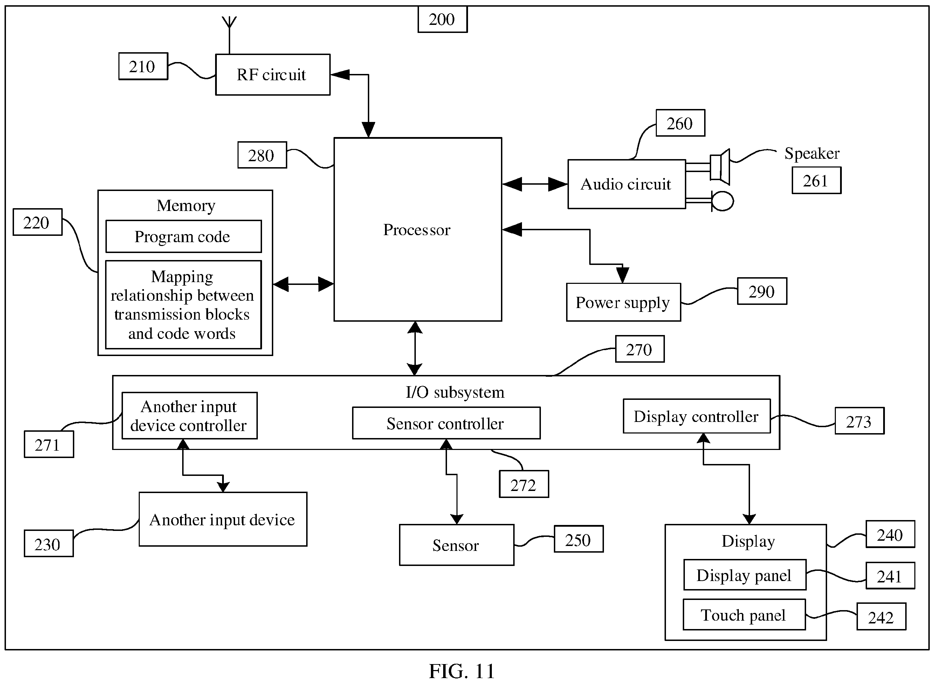

FIG. 11 is a schematic diagram of a structure of a computing device according to an embodiment of this application. The computing device in this embodiment includes a mobile phone, a tablet, a tablet computer, and the like.

For example, the computing device is a mobile phone. FIG. 11 is a block diagram of a partial structure of a mobile phone 200 related to an embodiment of this application. As shown in FIG. 11, the mobile phone 200 includes components such as a radio frequency (radio frequency, RF) circuit 210, a memory 220, another input device 230, a display 240, a sensor 250, an audio circuit 260, an I/O subsystem 270, a processor 280, and a power supply 290. A person skilled in the art may understand that the structure of the mobile phone shown in FIG. 11 does not constitute a limitation to the mobile phone, and the mobile phone may include more components or fewer components than those shown in the figure, or some components may be combined, or some components may be separated, or a different component deployment may be used. A person skilled in the art may understand that the display 240 belongs to a user interface (user interface, UI), and the mobile phone 200 may include more or fewer user interfaces than those shown in the figure.

The following describes each component of the mobile phone 200 in detail with reference to FIG. 11.

The RF circuit 210 may be configured to receive and send signals during information receiving and sending or during a call. In particular, after receiving downlink information of a base station, the RF circuit 210 sends the downlink information to the processor 280 for processing, and further sends related uplink data to the base station. Generally, the RF circuit includes but is not limited to an antenna, at least one amplifier, a transceiver, a coupler, a low noise amplifier (low noise amplifier, LNA), a duplexer, and the like. In addition, the RF circuit 210 may further communicate with a network and another device through wireless communication. The wireless communication may use any communication standard or protocol, including but not limited to global system for mobile communication (global system for mobile communication, GSM), general packet radio service (general packet radio service, GPRS), code division multiple access (code division multiple access, CDMA), wideband code division multiple access (wideband code division multiple access, WCDMA), long term evolution (long term evolution, LTE), an email, a short messaging service (short messaging service, SMS), and the like. In this embodiment of this application, the RF circuit 210 may be configured to receive a Bluetooth signal, an OFDM signal, or the like. In addition, the RF circuit 210 may be further configured to send a positioning request signal, a positioning termination signal, or the like.

The memory 220 may be configured to store a software program and a module. The processor 280 performs various function applications of the mobile phone 200 and data processing by running the software program and the module that are stored in the memory 220. The memory 220 may mainly include a program storage area and a data storage area. The program storage area may store an operating system, an application program required by at least one function (such as a sound playing function or an image playing function), and the like. The data storage area may store data (such as audio data or a phone book) created based on use of the mobile phone 200, and the like. In addition, the memory 220 may include a high-speed random access memory, or may include a nonvolatile memory such as at least one magnetic disk storage device, a flash memory, or another volatile solid-state storage device. In a specific embodiment of this application, the memory 220 may store parameter change information of a mobile phone position.

The another input device 230 may be configured to: receive entered digital or character information; and generate key signal input related to user settings and function control of the mobile phone 200. Specifically, the another input device 230 may include but is not limited to one or more of a physical keyboard, a function key (such as a volume control key or an on/off key), a trackball, a mouse, a joystick, and an optical mouse (the optical mouse is a touch-sensitive surface that does not display visual output, or an extension of a touch-sensitive surface formed by a touchscreen). The another input device 230 is connected to another input device controller 271 of the I/O subsystem 270, and exchanges a signal with the processor 280 under control of the another input device controller 271.

The display 240 may be configured to display information entered by a user or information provided for a user, and various menus of the mobile phone 200, and may further receive a user input. Specifically, the display 240 may include a display panel 241 and a touch panel 242. The display panel 241 may be configured by using a liquid crystal display (liquid crystal display, LCD) or an organic light-emitting diode (organic light-emitting diode, OLED). The touch panel 242, also referred to as a touchscreen, a touch-sensitive screen, or the like, may collect a contact or non-contact operation of the user on or near the touch panel 242 (such as an operation of the user on or near the touch panel 242 by using any appropriate object or accessory such as a finger or a stylus, or a motion sensing operation. The operation includes a single-point control operation, a multi-point control operation, or another type of operation), and drive a corresponding connection apparatus based on a preset program. Optionally, the touch panel 242 may include two parts: a touch detection apparatus and a touch controller. The touch detection apparatus detects a touch orientation and gesture of the user, detects a signal brought by a touch operation, and transmits the signal to the touch controller. The touch controller receives touch information from the touch detection apparatus, converts the touch information into information that can be processed by the processor, and then sends the information to the processor 280; and can receive and execute a command sent by the processor 280.In addition, the touch panel 242 may be implemented in a plurality of types such as a resistive type, a capacitive type, an infrared ray, and a surface acoustic wave, or the touch panel 242 may be implemented by using any technology developed in the future. Further, the touch panel 242 may cover the display panel 241. The user may perform, based on content displayed on the display panel 241 (the displayed content includes but is not limited to a soft keyboard, a virtual mouse, a virtual key, an icon, and the like), an operation on or near the touch panel 242 that covers the display panel 241. After detecting the operation on or near the touch panel 242, the touch panel 242 transmits the operation to the processor 280 by using the I/O subsystem 270, to determine user input. Then, the processor 280 provides corresponding visual output on the display panel 241 by using the I/O subsystem 270 based on the user input. In FIG. 11, the touch panel 242 and the display panel 241 serve as two independent components to implement input and output functions of the mobile phone 200. However, in some embodiments, the touch panel 242 and the display panel 241 may be integrated to implement the input and output functions of the mobile phone 200.

The mobile phone 200 may further include at least one type of sensor 250, such as a light sensor, a motion sensor, a specific absorption rate (specific absorption rate, SAR) sensor, and another sensor. Specifically, the light sensor may include an ambient light sensor and a proximity sensor. The ambient light sensor may adjust luminance of the display panel 241 based on brightness of ambient light. The proximity sensor may power off the display panel 241 and/or backlight when the mobile phone 200 moves to an ear. As a type of motion sensor, an accelerometer sensor may detect magnitudes of accelerations in various directions (typically three axes), and detect a magnitude and a direction of gravity in a still state, and may be used to mobile phone posture recognition applications (such as landscape/portrait switching, related gaming, and magnetometer posture calibration), and vibration recognition-related functions (such as a pedometer or knock recognition), and the like. For other sensors such as a gyroscope, a barometer, a hygrometer, a thermometer, and an infrared sensor that can also be configured in the mobile phone 200, details are not described herein.

The audio circuit 260, a speaker 261, and a microphone 262 may provide an audio interface between the user and the mobile phone 200. The audio circuit 260 may transmit, to the speaker 261, a signal converted from received audio data, and the speaker 261 converts the signal into a sound signal and outputs the sound signal. In addition, the microphone 262 converts a collected sound signal into a signal, and the audio circuit 260 receives the signal and then converts the signal into audio data, and outputs the audio data to the RF circuit 208 to send the audio data to, for example, another mobile phone, or outputs the audio data to the memory 220 for further processing.

The I/O subsystem 270 is configured to control an external input/output device, and may include the another input device controller 271, a sensor controller 272, and a display controller 273. Optionally, one or more other input control device controllers 271 receive a signal from the another input device 230 and/or send a signal to the another input device 230. The another input device 230 may include a physical button (a push button, a rocker arm button, or the like), a dial, a slider switch, a joystick, a scroll wheel, or an optical mouse (the optical mouse is a touch-sensitive surface that does not display a visual output, or is an extension of a touch-sensitive surface formed by a touchscreen). It should be noted that the another input device controller 271 may be connected to any one or more of the foregoing devices. The display controller 273 in the I/O subsystem 270 receives a signal from the display 240 and/or sends a signal to the display 240. After the display 240 detects a user input, the display controller 273 converts the detected user input into interaction with a user interface object displayed on the display 240, to implement human-machine interaction. The sensor controller 272 may receive a signal from one or more sensors 250 or send a signal to one or more sensors 250.

The processor 280 is a control center of the mobile phone 200 and is connected to all parts of the entire mobile phone through various interfaces and lines, and performs various functions of the mobile phone 200 and data processing by running or executing the software program and/or the module stored in the memory 220 and invoking data stored in the memory 220, to perform overall monitoring on the mobile phone. Optionally, the processor 280 may include one or more processing units. Preferably, an application processor and a modem processor may be integrated into the processor 280. The application processor mainly processes an operating system, a user interface, an application, and the like. The modem processor mainly processes wireless communication. It may be understood that the modem processor may not be integrated into the processor 280.

The mobile phone 200 further includes the power supply 290 (for example, a battery) that supplies power to each component. Preferably, the power supply may be logically connected to the processor 280 through a power management system, to implement functions such as charging management, discharging management, and power consumption management by using the power management system.

Although not shown, the mobile phone 200 may further include a camera, a Bluetooth module, and the like. Details are not described herein. The mobile phone may perform the steps performed by the positioning device in the positioning method shown in FIG. 5. Details are not described herein again. For details, refer to FIG. 4 and related content.

It should be understood that the foregoing modules or components and an integration status thereof are merely examples. This is not limited in this application.

An embodiment of this application further provides a computer program product. When the computer program product runs on a computer or a processor, the computer or the processor is enabled to perform one or more steps in any one of the foregoing methods. When the foregoing modules in the device are implemented in a form of a software functional unit and sold or used as an independent product, the modules may be stored in a computer-readable storage medium.

In the foregoing embodiments, descriptions of all embodiments have respective focuses. For a part that is not described in detail or recorded in an embodiment, refer to related descriptions in other embodiments.

It should be further understood that sequence numbers of the processes do not mean execution sequences in various embodiments of this application. The execution sequences of the processes should be determined according to functions and internal logic of the processes, and should not be construed as any limitation on the implementation processes of embodiments of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application, rather than limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A positioning method, comprising:

   receiving, by a positioning device, a positioning start message, wherein the positioning start message is used to trigger the positioning device to position a to-be-positioned device;
   recording, by the positioning device, a displacement parameter generated in a movement process of the positioning device, wherein the displacement parameter comprises a displacement direction and a displacement distance;
   receiving, by the positioning device in the movement process, a radio signal sent by the to-be-positioned device; and
   obtaining, by the positioning device, a relative position relationship between the positioning device and the to-be-positioned device based on the recorded displacement parameter and the radio signal sent by the to-be-positioned device.

2. The method according to claim 1, wherein after the receiving, by a positioning device, a positioning start message, the method further comprises:
   sending, by the positioning device, a positioning request message to the to-be-positioned device, wherein the positioning request message is used to trigger the to-be-positioned device to send the radio signal.

3. The method according to claim 1 or 2, wherein the receiving, by the positioning device in the movement process, a radio signal sent by the to-be-positioned device comprises:

   when the positioning device moves to a first position, receiving a first radio signal sent by the to-be-positioned device; and
   when the positioning device moves to a second position, receiving a second radio signal sent by the to-be-positioned device, wherein the first position and the second position are any two adjacent positions in the movement process of the positioning device; and

the obtaining, by the positioning device, a relative position relationship between the positioning device and the to-be-positioned device based on the recorded displacement parameter and the radio signal sent by the to-be-positioned device comprises:

> obtaining, by the positioning device, a plurality of angles of arrival of the to-be-positioned device through calculation based on the recorded displacement parameter, the first radio signal, and the second radio signal; and
>
> obtaining, by the positioning device, the relative position relationship between the positioning device and the to-be-positioned device based on the plurality of angles of arrival obtained through calculation.

4. The method according to claim 1 or 2, wherein the receiving, by the positioning device in the movement process, a radio signal sent by the to-be-positioned device comprises:

> when the positioning device moves to a first position, receiving a first radio signal sent by the to-be-positioned device; and
>
> when the positioning device moves to a second position, receiving a second radio signal sent by the to-be-positioned device, wherein the first position and the second position are any two positions in the movement process of the positioning device; and
>
> the obtaining, by the positioning device, a relative position relationship between the positioning device and the to-be-positioned device based on the recorded displacement parameter and the radio signal sent by the to-be-positioned device comprises:

> obtaining, by the positioning device, a plurality of angles of arrival of the to-be-positioned device through calculation based on the recorded displacement parameter, the first radio signal, and the second radio signal; and
>
> obtaining, by the positioning device, the relative position relationship between the positioning device and the to-be-positioned device based on the plurality of angles of arrival obtained through calculation.

5. The method according to claim 3 or 4, wherein the relative position relationship comprises a relative distance between the positioning device and the to-be-positioned device and a relative orientation between the positioning device and the to-be-positioned device, and after the obtaining a relative position relationship between the positioning device and the to-be-positioned device, the method further comprises:

comparing the relative distance with a preset threshold, and if the relative distance exceeds the preset threshold:

> continuing, by the positioning device, moving toward the to-be-positioned device based on the relative orientation, and recording the displacement parameter generated in the movement process of the positioning device;
>
> when the positioning device moves to a third position, receiving a third radio signal sent by the to-be-positioned device; and
>
> updating, by the positioning device, the relative position relationship between the positioning device and the to-be-positioned device based on the recorded displacement parameter and the third radio signal.

6. The method according to claim 5, wherein the updating the relative position relationship between the positioning device and the to-be-positioned device comprises: updating until the relative distance between the positioning device and the to-be-positioned device is less than the preset threshold.

7. A positioning device, comprising:

> a receiving unit, configured to receive a positioning start message, wherein the positioning start message is used to trigger the positioning device to position a to-be-positioned device;
>
> a recording unit, configured to record a displacement parameter generated in a movement process of the positioning device, wherein the displacement parameter comprises a displacement direction and a displacement distance;
>
> the receiving unit is further configured to receive, in the movement process, a radio signal sent by the to-be-positioned device; and
>
> a processing unit, configured to obtain a relative position relationship between the positioning device and the to-be-positioned device based on the displacement parameter and the radio signal sent by the to-be-positioned device.

8. The positioning device according to claim 7, wherein the positioning device further comprises a sending unit; and

the sending unit is configured to send a positioning request message to the to-be-positioned device, wherein the positioning request message is used to trigger the to-be-positioned device to send the radio signal.

9. The positioning device according to claim 7 or 8, wherein the receiving unit is specifically configured to:

   when the positioning device moves to a first position, receive a first radio signal sent by the to-be-positioned device; and
   when the positioning device moves to a second position, receive a second radio signal sent by the to-be-positioned device, wherein the first position and the second position are any two adjacent positions in the movement process of the positioning device; and
   the processing unit is specifically configured to:

   obtain a plurality of angles of arrival of the to-be-positioned device through calculation based on the recorded displacement parameter, the first radio signal, and the second radio signal; and
   obtain the relative position relationship between the positioning device and the to-be-positioned device based on the plurality of angles of arrival obtained through calculation.

10. The positioning device according to claim 7 or 8, wherein the receiving unit is specifically configured to:

    when the positioning device moves to a first position, receive a first radio signal sent by the to-be-positioned device; and
    when the positioning device moves to a second position, receive a second radio signal sent by the to-be-positioned device, wherein the first position and the second position are any two positions in the movement process of the positioning device; and
    the processing unit is specifically configured to:

    obtain a plurality of angles of arrival of the to-be-positioned device through calculation based on the recorded displacement parameter, the first radio signal, and the second radio signal; and
    obtain the relative position relationship between the positioning device and the to-be-positioned device based on the plurality of angles of arrival obtained through calculation.

11. The positioning device according to claim 9 or 10, wherein the relative position relationship comprises a relative distance between the positioning device and the to-be-positioned device and a relative orientation between the positioning device and the to-be-positioned device;

the processing unit is further configured to compare the relative distance with a preset threshold;
the recording unit is further configured to record a displacement parameter generated in a process in which the positioning device continues moving to the to-be-positioned device based on the relative direction when the relative distance exceeds the threshold;
the receiving unit is further configured to receive a third radio signal sent by the to-be-positioned device; and
the processing unit is further configured to update the relative position relationship between the positioning device and the to-be-positioned device based on the recorded displacement parameter and the third radio signal.

12. The positioning device according to claim 11, wherein the processing unit is specifically configured to:
update until the relative distance between the positioning device and the to-be-positioned device is less than the preset threshold.

13. A computing device, wherein the computing device comprises a memory and a processor, and the processor executes computer instructions stored in the memory, so that the computing device performs the method according to any one of claims 1 to 6.

14. A computer-readable storage medium, wherein the computer-readable storage medium stores a computer program, and when the computer program is executed by a processor, a function of the method according to any one of claims 1 to 6 is implemented.

Adaptive
range

Remote
rural area

Urban area
and
outdoor
area

Indoor

GPS, and wireless
cellular network–
based positioning

WLAN, BT, and
ZigBee positioning

UWB, and
microwave
positioning

RF, IF, and
ultrasonic
positioning

0.1 meters          1 meter          10 meters

Positioning
precision

FIG. 1

Positioning
processing
server 240

WLAN access
point 230

Bluetooth positioning
measurement point 221

Bluetooth positioning
measurement point 221

To-be-positioned
Bluetooth device 210

Bluetooth positioning
measurement point 221

Bluetooth positioning
measurement point 221

FIG. 2

EP 4 258 765 A1

FIG. 3

Position 1

Position 2

Move a positioning
device 410 to form a
virtual antenna array

Position N

To-be-
positioned
device 420

FIG. 4

| A positioning device receives a positioning start message | S501 |

| The positioning device records a displacement parameter generated in a movement process of the positioning device, where the displacement parameter includes a displacement direction and a displacement distance | S502 |

| The positioning device receives, in the movement process, a radio signal sent by a to-be-positioned device | S503 |

| The positioning device obtains a relative position relationship between the positioning device and the to-be-positioned device based on the recorded displacement parameter and the radio signal sent by the to-be-positioned device | S504 |

FIG. 5

FIG. 6

FIG. 7

FIG. 8

Moving direction

Estimate a direction and a distance by performing positioning for the first time

Perform positioning again, and correct the direction and the distance

Finally discover the to-be-positioned device

To-be-positioned device

FIG. 9

EP 4 258 765 A1

100

| 110 | 120 | 130 | 140 |
|---|---|---|---|
| Receiving unit | Recording unit | Processing unit | Sending unit |

FIG. 10

FIG. 11

## INTERNATIONAL SEARCH REPORT

| International application No. |
|---|
| **PCT/CN2021/141620** |

**A. CLASSIFICATION OF SUBJECT MATTER**

H04W 64/00(2009.01)i;  H04W 4/02(2018.01)i;  G01S 5/02(2010.01)i

According to International Patent Classification (IPC) or to both national classification and IPC

**B. FIELDS SEARCHED**

Minimum documentation searched (classification system followed by classification symbols)

H04W; H04Q; G01S

Documentation searched other than minimum documentation to the extent that such documents are included in the fields searched

Electronic data base consulted during the international search (name of data base and, where practicable, search terms used)

CNTXT; DWPI; WOTXT; USTXT; EPTXT; CNKI; 3GPP; IEEE: 定位, 移动, 距离, 位移, 方向, 角度, 到达角, AOA, 位置, 虚拟, 合成, 天线, 寻物, 寻找, 引导, 牵引, 找寻, positioning, move, distance, direction, angel, position, virtual, synthetic, antenna, search, look, lost, guide

**C. DOCUMENTS CONSIDERED TO BE RELEVANT**

| Category* | Citation of document, with indication, where appropriate, of the relevant passages | Relevant to claim No. |
|---|---|---|
| X | CN 1576877 A (FAN, Tianwei) 09 February 2005 (2005-02-09) claim 1, description pages 1-4 | 1-2, 7-8, 13-14 |
| Y | CN 1576877 A (FAN, Tianwei) 09 February 2005 (2005-02-09) claim 1, description pages 1-4 | 3-6, 9-12 |
| Y | CN 101776746 A (TIANJIN UNIVERSITY) 14 July 2010 (2010-07-14) description, paragraphs [0003]-[0004] | 3-6, 9-12 |
| X | CN 101945475 A (CHINA TRANSPORT TELECOMMUNICATIONS & INFORMATION CENTER, RESEARCH & DEVELOPMENT CENTER) 12 January 2011 (2011-01-12) description paragraphs [0058]-[0100] | 1-2, 7-8, 13-14 |
| A | US 2018100934 A1 (THALES SA.) 12 April 2018 (2018-04-12) entire document | 1-14 |
| A | CN 107810426 A (SONY MOBILE COMMUNICATIONS INC.) 16 March 2018 (2018-03-16) entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 January 2022** | **11 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/141620**

| Patent document cited in search report | | | Publication date (day/month/year) | Patent family member(s) | | | Publication date (day/month/year) |
|---|---|---|---|---|---|---|---|
| CN | 1576877 | A | 09 February 2005 | CN | 100578253 | C | 06 January 2010 |
| | | | | CN | 101694520 | A | 14 April 2010 |
| | | | | CN | 101694520 | B | 08 May 2013 |
| | | | | CN | 101685152 | A | 31 March 2010 |
| | | | | CN | 101685152 | B | 11 January 2012 |
| | | | | US | 004029558 | A1 | 12 February 2004 |
| | | | | US | 7711375 | B2 | 04 May 2010 |
| CN | 101776746 | A | 14 July 2010 | None | | | |
| CN | 101945475 | A | 12 January 2011 | CN | 101945475 | B | 19 December 2012 |
| US | 2018100934 | A1 | 12 April 2018 | FR | 3057348 | A1 | 13 April 2018 |
| | | | | FR | 3057348 | B1 | 19 July 2019 |
| | | | | PT | 3306272 | T | 05 May 2021 |
| | | | | US | 10481276 | B2 | 19 November 2019 |
| | | | | ES | 2869303 | T3 | 25 October 2021 |
| | | | | EP | 3306272 | A1 | 11 April 2018 |
| | | | | EP | 3306272 | B1 | 24 February 2021 |
| CN | 107810426 | A | 16 March 2018 | WO | 2016207932 | A1 | 29 December 2016 |
| | | | | EP | 3311184 | A1 | 25 April 2018 |
| | | | | US | 2016370450 | A1 | 22 December 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011635869